(19) Europäisches Patentamt
European Patent Office
Office européen des brevets

(11) Veröffentlichungsnummer: **0 022 489**
**B1**

(12) # EUROPÄISCHE PATENTSCHRIFT

(45) Veröffentlichungstag der Patentschrift: **31.03.82**

(51) Int. Cl.³: **C 09 B 62/09**, C 09 B 67/24

(21) Anmeldenummer: **80103509.8**

(22) Anmeldetag: **23.06.80**

(54) **Pulverförmige Farbstoffzubereitung.**

(30) Priorität: **14.07.79 DE 2928508**

(43) Veröffentlichungstag der Anmeldung: **21.01.81 Patentblatt 81/3**

(45) Bekanntmachung des Hinweises auf die Patenterteilung: **31.03.82 Patentblatt 82/13**

(84) Benannte Vertragsstaaten: **CH DE FR GB IT LI**

(56) Entgegenhaltungen:
**CH-A-449 818**
**CH-A-482 000**
**DE-A-1 247 511**
**DE-A-2 301 638**
**GB-A-1 220 823**

(73) Patentinhaber: **BASF Aktiengesellschaft, Carl-Bosch-Strasse 38, D-6700 Ludwigshafen (DE)**

(72) Erfinder: **Schaffer, Ortwin, Dr., Bruesseler Ring 43, D-6700 Ludwigshafen (DE)**
Erfinder: **Herrmann, Manfred, Dr., Parkstrasse 23, D-6700 Ludwigshafen (DE)**

EP 0 022 489 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Pulverförmige Farbstoffzubereitung

Die vorliegende Erfindung betrifft pulverförmige Zubereitungen des Chlortriazinfarbstoffes der Formel

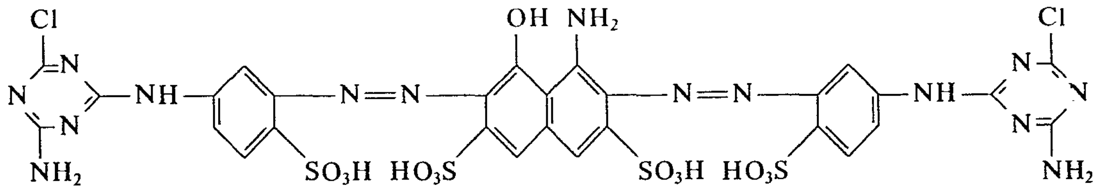

(I)

Pulverförmige Zubereitungen von Reaktivfarbstoffen werden üblicherweise so hergestellt, daß der ausgesalzene Farbstoff im Trockenschrank getrocknet und das getrocknete stückige Material durch Mahlen in den Pulverzustand überführt und anschließend z. B. mit Kochsalz oder Glaubersalz auf einen bestimmten Farbstoffgehalt standardisiert wird.

Wendet man dieses Verfahren auf den oben angegebenen Farbstoff an, so erhält man Zubereitungen, die in Wasser ungenügende Löslichkeit aufweisen und bei der Anwendung farbschwache und stippige Drucke und Kontinuefärbungen liefern.

Aufgabe der vorliegenden Erfindung war es, Farbstoffzubereitungen von (I) aufzufinden, welche die nachteiligen Eigenschaften der Zubereitungen des Standes der Technik nicht aufweisen.

Es wurde gefunden, daß für Druck- und Kontinuieverfahren gut geeignete pulverförmige Zubereitungen des Farbstoffs der Formel I vorliegen, wenn diese — bezogen auf (a + b + c)

a) 10 bis 65 Gew.-% des Farbstoffs der Formel I,
b) 5 bis 25 Gew.-% Natriumchlorid,
c) 10 bis 85 Gew.-% eines Kondensationsproduktes aus $\beta$-Naphthalinsulfonsäure und Formaldehyd und
d) gegebenenfalls noch weitere in pulverförmigen Zubereitungen üblicherweise enthaltene Mittel,

aufweisen.

Die Zubereitungen gemäß der Erfindung lassen sich durch einfaches Einrühren in Wasser leicht lösen. Im Gegensatz zu den Zubereitungen des Standes der Technik besitzen sie eine hohe Löslichkeit. Sie liefern stippenfreie Drucke und Kontinuiefärbungen und ergeben hohe Farbausbeuten im Druck und bei der Färbung.

Bevorzugt sind Zubereitungen, die 30 bis 65, insbesondere 45 bis 65 Gew.-% Farbstoff der Formel I enthalten. Die Zubereitungen der Erfindung werden in an sich bekannter Weise durch Homogenisieren oder Lösen des Farbstoffs (I) in Gegenwart des genannten anionaktiven Dispergiermittels in Wasser und anschließender Sprühtrocknung der Lösung bzw. Suspension bei Eingangstemperaturen der Heißluft von 100°C bis 200°C erhalten. Der Ausgangsfarbstoff kann hierfür in Form des trockenen Pulvers oder vorzugsweise in Form des bei der Synthese anfallenden Preßgutes verwendet werden.

Die anionaktiven Dispergiermittel vom Typ der Kondensationsprodukte $\beta$-Naphthalinsulfonsäure/Formaldehyd sind bekannt. Diese Dispergiermittel enthalten 2 und mehr Naphthalinreste, die durch Methylengruppen miteinander verbunden sind und in denen die Naphthalinreste in der Regel 1 Sulfonsäuregruppe tragen (vgl. Schwartz-Berry »Surface Active Agents« Vol. I, Interscience Publishers Inc., New York 1949).

Als weitere in pulverförmigen Zubereitungen üblicherweise enthaltene Mittel (d) kommen z. B. Netzmittel, welche die Benetzung der pulverförmigen Zubereitung beim Einrühren in Wasser beschleunigen, und Entstaubungsmittel in Betracht. Die Mengen an (d) können in der Regel bis zu 10, vorzugsweise bis zu 5 Gew.-%, bezogen auf (a + b + c) betragen.

Das in der Zubereitung enthaltene Natriumchlorid stammt aus der Isolierung des Farbstoffs nach der Synthese.

Die folgenden Ausführungsbeispiele sollen die Zubereitungen gemäß der Erfindung weiter erläutern. Die im folgenden genannten Teile und Prozentangaben beziehen sich auf das Gewicht.

Beispiel 1

77 Teile des Farbstoffs der Formel

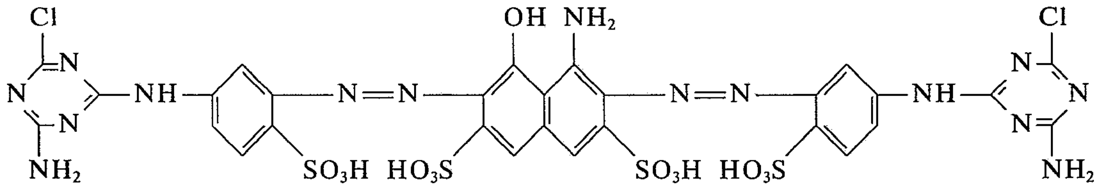

(I)

ber. trocken in Form des Preßkuchens und 23 Teile des Kondensationsprodukts aus Naphthalinsulfonsäure und Formaldehyd (Natriumsalz) werden mit soviel Wasser angeteigt, daß der Feststoffgehalt der Suspension bei 20% liegt. Die Suspension wird anschließend im Sprühturm mittels Zweistoffdüse getrocknet (Eingangstemperatur der Heißluft: 200° C). Die Zubereitung enthält 61% Farbstoff (I), 16% Natriumchlorid und 23% Kondensationsprodukt aus Naphthalinsulfonsäure und Formaldehyd.

Die pulverförmige Zubereitung besteht zu 96 Gew.-% aus kugelförmigen Teilchen, die kleiner als 20 µm sind.

Vergleichsbeispiel 1

Es wird wie beim Beispiel 1 gearbeitet, jedoch wird das Kondensationsprodukt aus $\beta$-Naphthalinsulfonsäure und Formaldehyd durch trockenes Natriumsulfat ersetzt. Nach der Sprühtrocknung liegt eine pulverförmige Zubereitung vor, die zu 70 Gew.-% aus Teilchen kleiner 20 µm besteht.

Vergleichsbeispiel 2

77 Teile des in Beispiel 1 genannten Farbstoffs, der durch Schranktrocknung und anschließendes Mahlen in einer Stiftmühle und in die Pulverform überführt wurde, wird mit 23 Teilen Natriumsulfat trocken homogen gemischt.

Die pulverförmige Zubereitung besteht zu 8 Gew.-% aus inhomogenen Teilchen, die kleiner als 20 µm sind.

Mit den nach den vorstehenden Beispielen erhaltenen Farbstoffzubereitungen wurden folgende Prüfungen durchgeführt:

a) Löslichkeit in Wasser
X g Farbstoff wurden in 1 l $H_2O$ von 60°C eingetragen und 5 Min. bei 1000 UpM gerührt. Anschließend wurde die Lösung über 2 Filter (Ø 90 mm; Schleicher und Schüll Nr. 1450 CV) gegeben (Druck in der Vorlage: ca. 20 mm Hg). Als Löslichkeit wurde diejenige Farbstoffmenge angegeben, bei der die Filter noch frei von Rückstand waren.

b) Farbstärke im Druck
Druckpaste:
6 g Farbstoffzubereitung pro 1000 g Algum S 15 Verdickung.
Material: Baumwollgewebe gebleicht.
Die Farbausbeute wurde spektralfotometrisch über die Remission bestimmt.

c) Stippigkeit
Die Stippigkeit wurde anhand von mikroskopischen Aufnahmen der Druckpaste visuell beurteilt.

Mit den Zubereitungen der Beispiele 1 und 2, und der Vergleichsbeispiele 1 und 2 wurden die in der Tabelle zusammengestellten Ergebnisse erhalten:

| Zubereitung | Löslichkeit | Farbstärke | Stippigkeit |
|---|---|---|---|
| Vergleichsbeispiel 1 | 55 g/l | 100% | einige Stippen |
| Vergleichsbeispiel 2 | 45 g/l | 90% | sehr viele große Stippen |
| Beispiel 1 | 75 g/l | 136% | stippenfrei |

**Patentanspruch**

Pulverförmige Zubereitungen des Farbstoffs der Formel

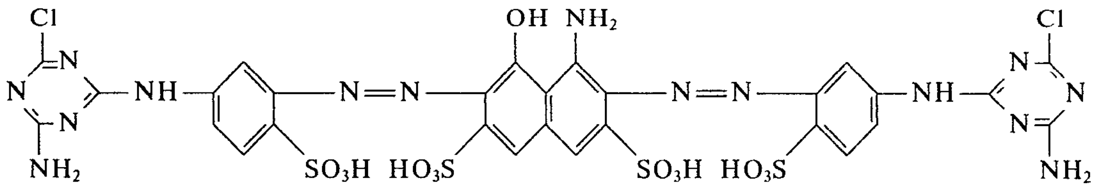 (I)

enthaltend — bezogen auf (a + b + c) —

a) 10 bis 65 Gew.-% des Farbstoffs der Formel I,
b) 5 bis 25 Gew.-% Natriumchlorid,
c) 10 bis 85 Gew.-% eines Kondensationsproduktes aus $\beta$-Naphthalinsulfonsäure und Formaldehyd und
d) gegebenenfalls noch weitere in pulverförmigen Zubereitungen üblicherweise enthaltene Mittel.

**Claim**

A powder formulation of the dye of the formula

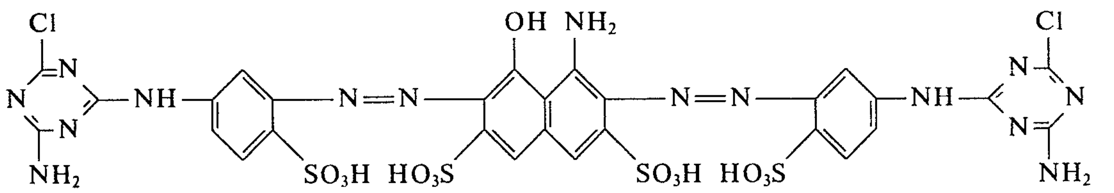 (I)

which contains, based on (a + b + c),

a) from 10 to 65% by weight of the dye of the formula I,
b) from 5 to 25% by weight of sodium chloride,
c) from 10 to 85% by weight of a condensate of $\beta$-naphthalenesulfonic acid and formaldehyde, and
d) if desired, other agents usually contained in powder formulations.

**Revendication**

Formes de présentation pulvérulentes du colorant de formule

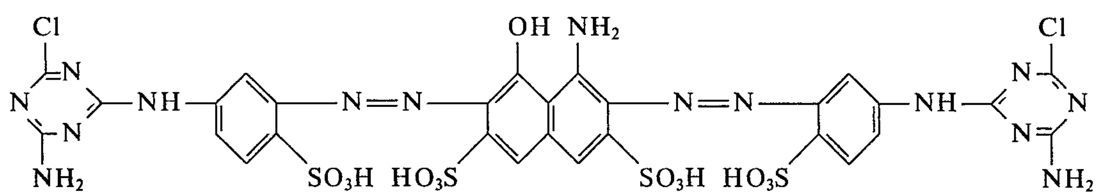 (I)

contenant — par rapport à (a + b + c) —

a) de 10 à 65% en poids du colorant de formule I,
b) de 5 à 25% en poids de chlorure de sodium,
c) de 10 à 85% en poids d'un produit de condensation de l'acide bêta-naphtalène sulfonique et du formaldéhyde, et
d) le cas échéant d'autres produits contenus habituellement dans les formes de présentation pulvérulentes.